# EUROPÄISCHE PATENTSCHRIFT

(11) **EP 1 571 378 B1**
(45) Veröffentlichungstag und Bekanntmachung des Hinweises auf die Patenterteilung: **20.02.2008**
(21) Anmeldenummer: 04100833.5
(22) Anmeldetag: 02.03.2004
(51) Int. Cl.: F16H 61/28, F16H 63/30

(54) **Schaltbetätigung für ein automatisiertes Getriebe**
Shift control mecanism for automated transmission
Mécanisme de commande de changement de vitesse pour transmission automatisée

(43) Veröffentlichungstag der Anmeldung: 07.09.2005
(73) Patentinhaber: Getrag Ford Transmissions GmbH, 50725 Köln (DE)
(72) Erfinder: Dobrinski, Jan, 40235 Düsseldorf (DE); Egyed, Robert, 51147 Köln (DE); Voigt, Torsten, 50859 Köln (DE); Doelling, Matthias, 51429 Bergisch-Gladbach (DE); Hoersken, Christian, 47228 Duisburg (DE)
(74) Vertreter: Drömer, Hans-Carsten

(56) Entgegenhaltungen:
- FR-A- 2 795 831
- US-A- 2 821 089
- US-A- 4 805 472

## Beschreibung

Die Erfindung betrifft eine Schaltbetätigung für ein automatisiertes Getriebe mit einer Steuervorrichtung und einem Aktuator, der einen Antrieb und eine elastische Kopplungsvorrichtung mit einer Getriebewelle des Getriebes aufweist, wobei die Kopplungsvorrichtung mit einer Speichervorrichtung zur Speicherung der durch den Antrieb in die Kopplungsvorrichtung eingespeisten mechanischen Energie versehen ist.

Derartige Schaltbetätigungen werden im Getriebebau zum Schalten und Wählen einer Getriebeübersetzung eingesetzt, indem durch den durch die Steuervorrichtung gesteuerten Aktuator die Position einer Wähl- und/oder Schaltwelle entsprechend verändert wird. Um über möglichst kurze Ansprech- und Betätigungszeiten beim Schalten und Wählen zu verfügen, aber dennoch ein nicht zu hartes und damit die Schaltbetätigung stark beanspruchendes Schalten und Wählen zu ermöglichen, kann, wie z.B. in DE 197 34 023 A1 oder in der gattungsgemäßen FR-A-2 795 831 vorgeschlagen, zwischen Antrieb und Getriebewelle eine Speichervorrichtung vorgesehen sein, wobei die hier vorgeschlagene mechanische Speichervorrichtung einen zwar kompakten, aber dennoch sehr komplexen und Bauraum beanspruchenden Aufbau aus einer Vielzahl von Bauelementen wie Scheiben, Schraubenfedern und dergleichen aufweist. Ferner sind bedingt durch den komplexen mechanischen Aufbau noch relativ große Schaltzeiten zu erwarten.

Es sind ferner Aktuatoren bekannt, die hydraulisch betätigt werden und somit kürzere Schaltzeiten erwarten lassen, welche jedoch baulich noch umfangreicher und damit kostenintensiver sind, da weitere Druckelemente wie Druckspeicher, Ventile und dergleichen benötigt werden, welche auf Grund ihrer Funktionsweise durch den herrschenden Umgebungsluftdruck beeinflussbar sind.

Aufgabe der Erfindung ist daher, eine Schaltbetätigung der eingangs genannten Art bereitzustellen, die einfacher aufgebaut, kostengünstiger herstellbar, einfach montierbar und vom Umgebungsluftdruck unabhängig ist sowie eine kurze Schalt- bzw. Wählzeit erlaubt.

Die Aufgabe wird durch die Bereitstellung einer Schaltbetätigung der eingangs genannten Art gelöst, wobei die Speichervorrichtung der Schaltbetätigung eine Torsionsfeder zur Speicherung der eingespeisten mechanischen Energie aufweist, die auf ihrer Antriebsseite mit einem Antriebselement des Aktuators und auf ihrer Abtriebsseite mit einem Abtriebselement des Aktuators in drehfester Verbindung steht. Hierbei wird unter der Torsionsfeder ein sich in Längsrichtung erstreckendes Bauteil verstanden, das zur Speicherung von mechanischer Energie um seine Längsachse tordiert wird. Mit der Torsionsfeder wird eine sehr einfach aufgebaute und damit kostengünstig herstellbare sowie einfach montierbare Speichervorrichtung vorgeschlagen, da die Torsionsfeder beispielsweise lediglich endseitig drehfest direkt mit einem Antriebs- und einem Abtriebselement verbunden und drehbar gelagert sein muss. Infolge dieses einfachen Bauprinzips sind nur wenige Bauteile notwendig, so dass mögliche auftretende Hystereseverluste durch die Speichervorrichtung in Form von Reibungsverlusten zwischen den bewegten Bauteilen minimiert werden. Ferner ist der Betrieb unabhängig vom herrschenden Umgebungsluftdruck. Somit ist die durch die Torsionsfeder gespeicherte Energie im wesentlichen von der Größe des Torsionswinkels, den geometrischen Abmessungen der Torsionsfeder sowie vom elastischen Verhalten der verwendeten Werkstoffe abhängig. Hierbei ist ein Drehmoment über das Antriebselement in die Torsionsfeder einleitbar, das durch die Torsionsfeder gespeichert oder, bei entsprechender Steuerung, über das Abtriebselement in Form einer translatorischen und/oder rotatorischen Bewegung an die Getriebewelle weitergegeben werden kann, wodurch ein entsprechender Schalt- oder Wählvorgang durchgeführt wird.

Der Antrieb weist bevorzugt einen steuerbaren Elektromotor, wie zum Beispiel einen Gleichstrom-, Wechselstrom-, Wanderwellen-, SR- oder Schrittmotor, auf, der bevorzugt das Antriebselement über eine Übersetzung mit dem gewünschten Drehmoment beaufschlägt. Auf der Abtriebsseite kann beispielsweise als Abtriebselement ein Wählfinger oder -Gabel zur translatorischen Bewegung der Wählwelle vorgesehen sein, wobei der Wählfinger torsionsfederseitig drehfest mit der Torsionsfeder um die Torsionsachse der Torsionsfeder drehbar ist, während er mit seinem freien Ende in eine Ausnehmung oder dergleichen in der Wählwelle eingreift, um über die Änderung des Drehwinkels die Wählwelle innerhalb eines vorbestimmten Wellweges translatorisch zu bewegen. Ähnlich kann der Abtriebsseite der Torsionsfeder ein Schaltfinger oder -Gabel bzw. eine Übersetzung angeordnet sein, durch die das über die Torsionsfeder übermittelte Drehmoment in eine Drehbewegung der Schaltwelle umsetzbar ist. Hierbei können, wie üblicherweise verwendet, Schalt- und Wählvorgang durch zwei getrennte, üblicherweise parallel zueinander angeordnete Getriebewellen, eine Wählwelle und eine Schaltwelle, oder durch eine Getriebewelle bewirkt werden, die beide Funktionen, das Wählen wie das Schalten, ermöglicht.

Die Steuerung kann auf verschiedene Art erfolgen. Beispielsweise kann vorgesehen sein, dass der Torsionswinkel durch eine schrittweise Messung des Drehwinkels der Torsionsfeder, wie zum Beispiel über ein um die Torsionsachse als Drehachse angeordnetes scheibenförmiges Element, erfolgen kann, das zum Beispiel über dem äußeren Umfang eine Zahnung trägt, deren fortlaufende Bewegung bevorzugt berührungslos durch beispielsweise induktive, magnetische oder lichtoptische Sensoren gemessen werden kann. Eine andere Möglichkeit bietet die Messung des translatorischen oder rotatorischen Weges, den ein Bauteil zweckmäßigerweise der Antriebsseite durch die Betätigung des Motors zurückgelegt hat. Denkbar ist ebenfalls eine Messung des Wegfortschritt durch einen Schrittmotor.

Auf der Abtriebsseite kann, wie hier besonders bevorzugt, eine Schaltkulisse vorgesehen sein, die einen bestimmten Bewegungspfad der Schalt- und/oder Wählwelle vorgibt, so dass die Torsionsfeder die eingespeiste mechanische Energie im Falle einer Blockierung des Bewegungspfades der Welle speichert und die eingespeiste Energie bei einem Freigeben des Bewegungspfades der Welle unmittelbar an die Schalt- und/oder Wählwelle weitergibt. Da die zur Bewegung der Welle notwendige Energie bereits in der Torsionsfeder gespeichert ist, kann ein Wähl- bzw. Schaltvorgang in sehr kurzer Zeit erfolgen, indem die Torsionsfeder in den durch die Schaltkulisse vorbestimmten Bewegungspfad sich hineinentspannt. Funktionsweise und Aufbau einer entsprechenden Schaltkulisse sind in der noch nicht veröffentlichten Europäischen Patentanmeldung 03103577.7 beschrieben, die ausdrücklich in den Offenbarungsgehalt dieser Anmeldung mit einbezogen wird, da durch diese eine der Erfindung zugrunde liegende Teilaufgabe in bezug auf eine rasche Schaltungszeit weiter gelöst wird. Selbstverständlich können auch andere Sperrmechanismen angewandt werden, die den Bewegungspfad der Wähl- und/oder Schaltwelle in gewünschter Weise vorgeben.

In der Erfindung ist die Torsionsfeder als Torsionsstab ausgebildet. Hiermit wird ein besonders einfaches Konstruktionsprinzip der Torsionsfeder vorgeschlagen. Hierbei kann die Torsionsfeder zum Beispiel als Zylinder mit kreisförmigem oder ovalem Querschnitt oder als prismatischer Körper mit polygonem Querschnitt ausgeführt sein. Bevorzugt sind hierbei Hohlkörper, die eine entsprechend fein dosierbare Tordierung ihrer selbst ermöglichen.

Der Torsionsstab weist eine Anzahl von Torsionselementen auf, die parallel zueinander in Längsrichtung und relativ zueinander verschiebbar angeordnet sind. Hierbei können die Torsionselemente beispielsweise als konzentrisch zueinander angeordnete Hohlzylinder ausgeführt sein, die endseitig jeweils am Zylinderboden und Zylinderdeckel drehfest montiert sind. In einer anderen Ausführungsform können die einzelnen Torsionselemente durch den Zylindermantel eines oder mehrerer konzentrisch ineinander angeordneter Hohlzylinder gebildet sein, die zueinander beabstandet oder aneinandergrenzend angeordnet den Zylindermantel bilden. Bevorzugter ist jedoch eine Weiterbildung der Erfindung, in der die den Torsionsstab bildenden Torsionselemente so nebeneinander angeordnet sind, dass im entspannten Zustand der Torsionsfeder ihre Längsachsen in einer Ebene liegen, d. h., dass die Torsionselemente in einer quer zu ihrer Längsrichtung ausgerichteten Reihe angeordnet sind. Hierbei liegen die Torsionselemente bevorzugt jeweils an einer Gleitfläche aneinander an und gleiten zur relativen Verschiebung einander ab. Hierbei sind die Gleitflächen der Torsionselemente bevorzugt mit einem möglichst geringen Reibungskoeffizienten ausgestattet, um Hystereseverluste durch Anspannen und Entspannen der Torsionsfeder möglichst gering zu halten. Hierbei können die Gleitflächen bevorzugt eine Oberfläche mit möglichst geringer Rauhigkeit und/oder eine reibungsvermindernde Oberflächenbeschichtung, zum Beispiel mit eingelagertem Molybdänsulfid, aufweisen. Ferner können die Torsionselemente jeweils endseitig durch zwischen den Torsionselementen angeordneten Abstandshaltern so beabstandet sein, dass sich die Gleitflächen erst bei einem bestimmten Torsionswinkel der Torsionsfeder berühren.

In einer Weiterbildung der erfindungsgemäßen Schaltbetätigung weisen die Torsionselemente einen rechtwinkligen Querschnitt auf. Hierdurch wird eine besonders kompakte Bauweise der Torsionsfeder erzielt. Ferner kommt diese Form einer vereinfachten Herstellung und Konstruktion der Torsionsfeder entgegen, da in Frage kommende Federwerkstoffe wegen ihrer in der Regel großen Härte und häufig geringen Duktilität schwer bearbeitbar sind und somit es günstiger ist, auf Halbzeug zurückgreifen zu können, welches bereits in der Grundform der Federform in etwa entspricht.

In einer anderen Ausbildung des erfindungsgemäßen Gegenstandes weisen die Torsionselemente einen Querschnitt auf, dessen durch die Gleitflächen gebildeten Gleitseiten gekrümmt sind. Abhängig von der Art der Krümmung benachbarter Gleitflächen, kann hierdurch beispielsweise bei zwei sich berührenden konvexen Gleitflächen eine größere Beweglichkeit und damit geringer Hystereseverluste erzielt werden. Bevorzugt ist eine Ausbildung, in der zwei angrenzende Gleitflächen zweier benachbarter Torsionselemente die eine Gleitfläche konkav und die andere Gleitfläche konvex gekrümmt ist. Hierdurch greift die konvexe Gleitfläche in die konkave ein und wird hierdurch in der bzw. durch die konkave Gleitfläche geführt.

Abhängig von den Krümmungsradien der einzelnen Gleitflächen, gleiten die Gleitflächen flächig oder an mehreren Punkten aneinander ab. Im Sinne einer verstärkten Führung der Torsionselemente sind die Krümmungsradien der Gleitseiten bevorzugt gleich groß. In einer Weiterbildung der Torsionsfeder ist bei zwei benachbarten Torsionselementen bezüglich der Gleitflächen das eine Torsionselement bikonvex und das andere Torsionselement bikonkav ausgebildet. Hierdurch wird eine besonders starke Führung der Torsionselemente untereinander erzielt, die verhindert, dass die einzelnen Torsionselemente ausknicken können. In einer anderen Ausbildung können die Torsionselemente bezüglich der Gleitflächen sichelförmig ausgebildet sein. Hierbei ist es von Vorteil, dass das sich in der Mitte befindende Torsionselement bikonvex ausgebildet ist, damit sich die äußeren Torsionselemente mit ihrer konkaven Gleitfläche an die konvexen Gleitflächen des inneren Torsionselementes und die weiter nach außen hin folgenden Torsionselemente entsprechend mit ihren nach innen gerichteten konkaven Gleitflächen an die entsprechend nach außen gerichteten konvexen Gleitflächen der benachbarten Torsionselemente anliegen können.

In einer Weiterbildung der Erfindung weisen die Torsionselemente jeweils einen Querschnitt auf, dessen durch die Gleitflächen gebildete Höhe größer als dessen Breite ist. Hiermit werden entsprechend ihrer Höhe dünne Torsionselemente vorgeschlagen, durch die ein bestimmter Torsionswinkel bei einem bestimmten Drehmoment leichter einstellbar ist. Diese Ausführungsform lässt sich besonders gut aus einem üblichen Halbzeug aus Federstahl in Form eines Bandes fertigen.

Es wird eine Weiterbildung der Schaltbetätigung bevorzugt, in der die Torsionselemente jeweils einen eine Länge und eine Höhe aufweisenden Längsquerschnitt parallel zu den Gleitflächen aufweisen, dessen Höhe zu den Enden der Torsionselemente zunimmt. Hiermit wird eine Form der Torsionselemente vorgeschlagen, die in einem Mittenbereich einen entsprechend geringeren Querschnitt als in einem Endbereich aufweist. Dadurch wird der Ort der größten Torsion in den Bereich des dünnsten Querschnittes verlegt und ist somit über die Geometrie der Torsionselemente in ihrem Ort wie auch in ihrem Umfang festlegbar.

Bevorzugt weist der Längsquerschnitt der Torsionselemente einen X-förmigen Verlauf auf. Hiermit wird ein gleichmäßiger Längsschnittverlauf mit linearer Ab- bzw. Zunahme vorgeschlagen, wobei in dem Mittenbereich ein bestimmter Querschnitt erhalten bleibt. Hierdurch sind Torsionsort und -Größe besser einstellbar bzw. reproduzierbar einstellbar. Um eine zu große Torsionsspannungsspitze in der Mitte zu vermeiden, sollte der mittlere Bereich eine bestimmte Länge der Torsionselemente umfassen.

In einer Weiterbildung wird vorgeschlagen, dass die Torsionsfeder aus einem Federstahl gefertigt ist.

Die vorliegende Erfindung wird anhand zweier Ausführungsbeispiele mit einer zugehörigen Zeichnung näher erläutert. In der Zeichnung zeigen
- Fig. 1: eine perspektivische Aufsicht auf einen mit einer Getriebewelle verbundenen Aktuator mit jeweils lediglich in unmittelbarem Wirkzusammenhang mit einer Speichervorrichtung stehenden Bauteilen,
- Fig. 2: in schematischer perspektivischer Darstellung einen Torsionsstab mit Torsionselementen,
- Fig.3: in einer stirnseitigen Ansicht ein anderes Ausführungsbeispiel eines Torsionsstabes mit Torsionselementen und
- Fig.4: in schematischer Darstellung einen Verlauf eines Drehmomentes in Abhängigkeit vom Drehwinkel.

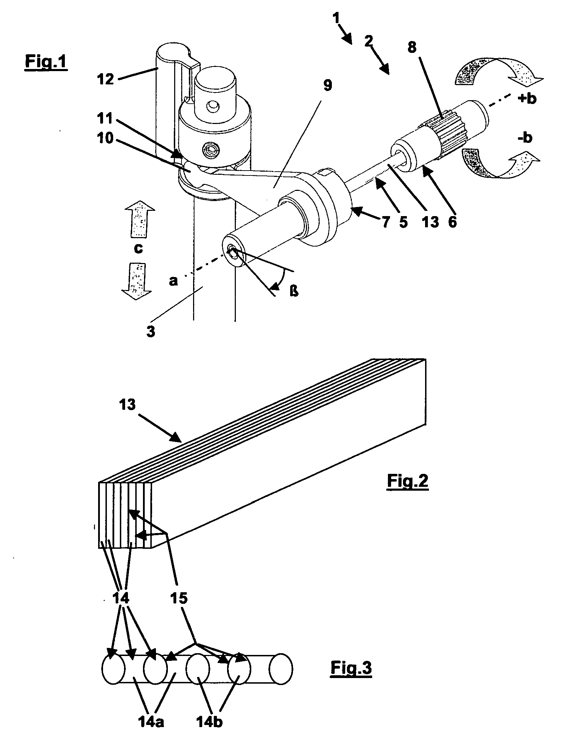

In Fig. 1 ist ein zu einer Schaltbetätigung zugehöriger Aktuator 1 gezeigt, der einen hier nicht gezeigten Antrieb und eine elastische Kopplungsvorrichtung 2 mit einer als Wählwelle 3 ausgebildeten Getriebewelle eines hier zeichnerisch nicht weiter ausgeführten Getriebes aufweist. Hierbei sind der Übersichtlichkeit halber von der Schaltbetätigung sowie von dem automatisierten Getriebe lediglich die Teile dargestellt, die im Wirkzusammenhang mit der elastischen Kopplungsvorrichtung stehen und die zum Verständnis der vorliegenden Erfindung notwendig sind.

Die Kopplungsvorrichtung 2 ist mit einer Speichervorrichtung 4 zur Speicherung der durch den Antrieb in die Kopplungsvorrichtung 2 eingespeisten mechanischen Energie versehen. Die Speichervorrichtung 4 weist eine Torsionsfeder 5 zur Speicherung der eingespeisten mechanischen Energie auf, die auf ihrer Antriebsseite mit einem Antriebselement 6 des Aktuators 1 und auf ihrer Abtriebsseite mit einem Abtriebselement 7 des Aktuators 1 in drehfester Verbindung steht. Torsionsfeder 5, Antriebselement 6 und Abtriebselement 7 sind ferner auf einer gemeinsamen Drehachse a angeordnet, wobei das Antriebselement 6 sowie das Abtriebselement 7, wie hier jedoch nicht weiter dargestellt, vorzugsweise endseitig drehbar gelagert sind. Das Antriebselement 6 ist umfänglich mit einem Zahnkranz 8 versehen, an den der Antrieb zur Einspeisung mechanischer Energie in Drehrichtung b angreift, wobei, wie in der Zeichnung angedeutet, der Antrieb den Zahnkranz 8 in positivem wie auch in negativem Drehsinn drehen kann. Ebenfalls umfänglich ist an dem Abtriebselement 7 ein Wählfinger 9 vorgesehen, der mit einer seitlichen Erstreckung 10 in eine Ausnehmung 11 der Wählwelle 3 eingreift. An der vom Betrachter abgewandten Seite der Wählwelle 3 ist eine Schaltkulisse 12 vorgesehen, die hier weiter zeichnerisch nicht erläutert ist. Diese Schaltkulisse 12 dient, wie in der Europäischen Patentanmeldung 03103577.7 näher beschrieben, zur Führung der Wählwelle 3 (und/oder einer entsprechenden Schaltwelle) in einem vorbestimmten Bewegungspfad, der entsprechend des Wählvorganges bestimmte Haltepunkte zur Blockierung der Wählwelle 3 vorsieht. Der Ausrichtung des Bewegungspfades ist in dem hier gewählten Ausführungsbeispiel durch die translatorische Auf- und Abwärtsbewegung c der Wählwelle 3 wiedergegeben.

Wird zur Einleitung eines Wählvorganges der Zahnkranz 8 beispielsweise in positiver Drehrichtung a bewegt, so wird diese Bewegung über das Antriebselement 6 auf die Torsionsfeder 5 übertragen. Hierzu ist die Wählwelle 3 zunächst durch die Schaltkulisse 12 in ihrer Bewegung blockiert, so dass die Torsionsfeder 5 gemäß der eingeleiteten mechanischen Energie tordiert wird und somit diese Energie speichert. Die Blockierung der Wählwelle 3 kann beispielsweise durch einen hier nicht dargestellten Kulissenstift erzielt, der drehfest mit der Wählwelle 3 verbunden ist und sich radial seitlich von der Welle erstreckt, wobei der Kulissenstift mit seinem freien Ende in die Schaltkulisse 12 eingreift und in ihr geführt wird. Wird vom Benutzer ein Wählvorgang vorgenommen, so gibt die Schaltkulisse den Kulissenstift innerhalb eines bestimmten Pfades frei, in den hinein sich die Torsionsfeder 5 entspannen und ihre gespeicherte mechanische Energie über den Wählfinger 9 in die Wählwelle 3 einspeisen kann, so dass eine unmittelbar eine sofortige translatorische Bewegung c der Wählwelle bewirkt wird, die in dem hier gewählten Beispiel als Aufwärtsbewegung ausgebildet ist. Ist eine weitere Bewegung der Wählwelle 3 durch den Benutzer gewünscht, so wird der Antrieb zur Bewegung des Zahnkranzes 8 in gewünschter Drehrichtung entsprechend angesteuert und die Wählwelle 3 durch den Wählfinger 9 in dem durch die Schaltkulisse 12 eingegebenen Pfad weiterbewegt. Ist kein sofortiger weiterer Wählvorgang gewünscht, so kann die Torsionsfeder 5 entsprechend dem zu erwartenden Wählvorgang gespannt werden, so dass die Torsionsfeder 5 mit erfolgtem Wählvorgang die in ihr gespeicherte mechanische Energie unmittelbar über den Wählfinger 9 in die Wählwelle 3 einleiten kann.

In dem hier gezeigten Beispiel wird eine Wählwelle 3 gezeigt. Die erfindungsgemäße Schaltbetätigung ist jedoch auch für eine Schaltwelle geeignet, die zur Ausführung eines Schaltvorganges in einem bestimmten Drehwinkel gedreht wird. Hierzu kann das Abtriebselement des Aktuators die in der Torsionsfeder eingespeicherte mechanische Energie direkt als Drehbewegung auf die Schaltwelle oder über eine geeignete Übersetzung, wie zum Beispiel über ineinandergreifende Zahnräder oder über einen Schaltfinger, der mit einer Erstreckung gemäß dem Stand der Technik in die Schaltwelle eingreift, erfolgen.

Selbstverständlich ist die erfindungsgemäße Schaltbetätigung auch für ein automatisiertes Getriebe geeignet, das eine kombinierte Schalt- und Wählwelle aufweist, wobei für die Schalt- und die Wählbewegung der Welle jeweils ein zugehöriger Aktuator vorgesehen ist.

In den Figuren 2 und 3 werden schematisch verschiedene Ausführungsformen der Torsionsfeder 5 gezeigt, die als Torsionsstab 13 ausgebildet ist. Der Torsionsstab 13 weist hierbei in seiner Längserstreckung eine Anzahl von Torsionselementen 14 auf, die parallel zueinander in Längsrichtung und relativ zueinander verschiebbar angeordnet sind. Nicht dargestellt sind in den Figuren 2 und 3 Befestigungs- und/oder Fixierelemente, durch die der Torsionsstab 13 mit dem Antriebselement 6 bzw. mit dem Abtriebselement 7 bevorzugt endseitig verbunden ist und die Torsionselemente in ihrer vorgesehenen Anordnung gehalten werden.

In Fig. 2 sind die Torsionselemente stabförmig mit rechtwinkligem Querschnitt ausgebildet, wobei die Torsionselemente 14 an einer Gleitebene 15 aneinander grenzen, an der sie zur relativen Verschiebung aneinander abgleiten können, wobei die Torsionselemente 14 in einer Höhe nebeneinander liegend bzw. in einer quer zu ihrer Längsrichtung verlaufenden Reihe angeordnet sind. Hierbei ist die die Gleitfläche 15 bildende Höhe des Querschnittes der Torsionselemente erheblich größer als die Breite des Querschnittes ausgebildet und weisen damit eine Form auf, die sich besonders gut für die Herstellung aus Halbzeug aus hier bevorzugt vorgesehenem Federstahl eignet. Zur Befestigung des Torsionsstabes 13 und zur Lagefixierung der Torsionselemente 14 in ihrer endseitigen relativen Lage zueinander können endseitig Befestigungslöcher vorgesehen sein, die senkrecht zur Gleitfläche 15 durch die Torsionselemente 14 geführt sind und durch die jeweils ein entsprechender Befestigungsstift oder dergleichen zur Befestigung des Torsionsstabes 13 in dem Antriebselement 6 bzw. in dem Abtriebselement 7 geführt werden kann.

In Fig. 3 ist ein weiteres Ausführungsbeispiel eines Torsionsstabes 13 schematisch in einer Querschnittsdarstellung gezeigt, wobei in dieser Querschnittsdarstellung lediglich die geschnittenen Flächen der Torsionselemente 14 gezeigt sind. Ferner sind, wie auch in Fig. 2 gezeigt, die Torsionselemente 14 in einer quer zu ihrer Längsrichtung verlaufenden Reihe angeordnet und liegen mit einer Seitenfläche als Gleitfläche 15 zur relativen Verschiebung zueinander aneinander an. In diesem Ausführungsbeispiel weisen die Torsionselemente unterschiedliche Querschnitte, d.h. einen bikonkaven Querschnitt 14a und einen bikonvexen Querschnitt 15b, auf. Entsprechend sind zugehörige Gleitflächen 15 konkav bzw. konvex gekrümmt. Infolge dieser Krümmung werden die Torsionselemente 14 bei einer Torsion des Torsionsstabes 13 gegenseitig geführt. Hierbei ist es von Vorteil, wenn die Gleitflächen 15 der Torsionselemente 14 eine möglichst geringe Reibung aufweist, um mögliche auftretende Hystereseverluste zu minimieren.

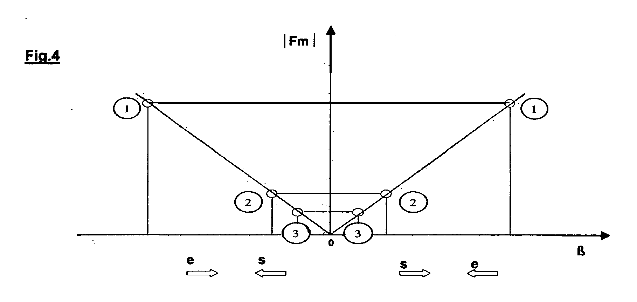

Zur Erläuterung des Ablaufes ist in Fig. 3 ein Diagramm wiedergegeben, in dem ein in der Torsionsfeder 5 gespeichertes Federmoment Fm in Abhängigkeit von einem Torsionswinkel β, um den die Torsionsfeder 5 unter Belastung tordiert wird, aufgetragen ist. Hierbei zeigte das Diagramm einen linearen Zusammenhang zwischen Federmoment Fm und Torsionswinkel β, wobei mögliche werkstoffbedingte und konstruktionsbedingte Reibungsverluste vernachlässigt wurden, wodurch es in der Praxis zu einer Hysterese zwischen Spannen und Entspannen kommen kann. Parallel zur Abszisse in Figur 4 sind Richtungsfeile e, s angegeben, die sich auf die Winkeländerung des Torsionswinkels β beim Entspannen e und beim Spannen s beziehen. Ferner sind im Graphen kreisförmig eingerahmte Punkte mit einer Zahlenfolge von 1-3 angegeben, die sich auf mögliche Schritte beim Ablauf eines Wählvorganges beziehen:
Punkt 1: Die Wählwelle 3 ist blockiert und die Feder ist um einen bestimmten Torsionswinkel β tordiert und hat ein vom Torsionswinkel β abhängiges Federmoment Fm als mechanische Energie gespeichert.
Punkt 2: Die Wählwelle 3 wird freigegeben, wobei sich ihr Kulissenstift in der Schaltkulisse 12 in einem vorbestimmten Weg bewegen kann, wodurch sich die Wählwelle in Richtung c bewegt, indem die Torsionsfeder bis zum Punkt 2 schlagartig teilweise entspannt wird. Zweckmäßigerweise wird die Torsionsfeder 5 durch den Antrieb unter einer bestimmten Vorspannung gehalten. Nach dem Wählvorgang kann die Torsionsfeder 5 erneut weiter vorgespannt werden und damit wieder ein erhöhtes Federmoment Fm aufnehmen, welches im Diagramm durch den Weg von Punkt 2 zu Punkt 1 wiederspiegelt.
Punkt 3: Nach Abschaltung des Antriebes kann konstruktiv die Möglichkeit vorgesehen sein, dass die Torsionsfeder 5 sich weiter entspannt, d. h., dass im Diagramm die Entspannung von Punkt 2 zu Punkt 3 erfolgt. Im Punkt 3 ist die Torsionsfeder unter einer bestimmten Vorspannung gehalten, die sich infolge von Reibungsvorgängen u.ä. in den mit der Torsionsfeder in Wirkzusammenhang stehenden Bauteilen der Schaltbetätigung und des Getriebes ergibt. Ferner kann angestrebt werden, eine bestimmte zusätzliche Vorspannung in der Torsionsfeder zu halten, um ein Spiel der zusammenwirkenden Teile in einer Richtung zu minimieren, das bei einer Betätigung der Schaltbetätigung erst überwunden werden muss, wodurch dann die Schaltungszeit entsprechend verlängert wird.

Anstatt dem hier in dem Diagramm dargestellten einfachen Wählvorgang kann selbstverständlich ein mehrfacher Wählvorgang eingestellt werden, nach dem die Torsionsfeder 5 in Stufen von Punkt 1 zu Punkt 2 entspannt wird, wobei jede dieser Stufen einen abgeschlossenen Wählvorgang darstellen kann.

Das Diagramm in Fig.4 zeigt den Federweg in beide Drehrichtungen b, wobei der einfachen Darstellung halber lediglich die Absolutwerte der Federmomente wiedergegeben worden sind. Ferner zeigt das Diagramm einen Idealzustand der Schaltbetätigung auch in der Weise, dass der Motor nach dem Spannen der Torsionsfeder 5 blockiert ist.

### BEZUGSZEICHENLISTE

- 1: Aktuator
- 2: Kopplungsvorrichtung
- 3: Wählwelle
- 4: Speichervorrichtung
- 5: Torsionsfeder
- 6: Antriebselement
- 7: Abtriebselement
- 8: Zahnkranz
- 9: Wählfinger
- 10: Erstreckung
- 11: Ausnehmung
- 12: Schaltkulisse
- 13: Torsionsstab
- 14: Torsionselement
- 14a: bikonkaver Querschnitt
- 14b: bikonvexer Querschnitt
- 15: Gleitfläche
- a: Drehachse
- b: Drehbewegung
- c: translatorische Bewegung
- r: Krümmungsradius
- e: Entspannungsrichtung
- s: Spannrichtung

## Patentansprüche

1. Schaltbetätigung für ein automatisiertes Getriebe mit einer Steuervorrichtung und einem Aktuator (1), der einen Antrieb und eine elastische Kopplungsvorrichtung (2) mit einer Getriebewelle des Getriebes aufweist, wobei die Kopplungsvorrichtung (2) mit einer Speichervorrichtung (4) zur Speicherung der durch den Antrieb in die Kopplungsvorrichtung (2) eingespeisten mechanischen Energie versehen ist,
wobei
die Speichervorrichtung (4) eine Torsionsfeder (5) zur Speicherung der eingespeisten mechanischen Energie aufweist, die auf ihrer Antriebsseite mit einem Antriebselement (6) des Aktuators (1) und auf ihrer Abtriebsseite mit einem Abtriebselement (7) des Aktuators (1) in drehfester Verbindung steht-,
**dadurch gekennzeichnet, dass**
die Torsionsfeder (5) als Torsionsstab (13) ausgebildet ist- und
der Torsionsstab (13) in seiner Längserstreckung eine Anzahl von Torsionselementen (14) aufweist, die parallel zueinander in Längsrichtung und relativ zueinander verschiebbar angeordnet sowie endseitig drehfest miteinander verbunden sind.

2. Schaltbetätigung nach Anspruch 1,
**dadurch gekennzeichnet, dass**
die Torsionselemente (14) in einer quer zu ihrer Längsrichtung verlaufenden Reihe angeordnet sind.

3. Schaltbetätigung nach Anspruch 1 oder 2,
**dadurch gekennzeichnet, dass**
die Torsionselemente (14) mit jeweils einer Seitenfläche als Gleitfläche (15) zur relativen Verschiebung zueinander aneinander anliegend angeordnet sind.

4. Schaltbetätigung nach einem der Ansprüche 1 bis 3,
**dadurch gekennzeichnet, dass**
die Torsionselemente (14) jeweils einen polygonen Querschnitt aufweisen.

5. Schaltbetätigung nach einem der Ansprüche 1 bis 4,
**dadurch gekennzeichnet, dass**
die Torsionselemente (14) einen rechtwinkligen Querschnitt aufweisen.

6. Schaltbetätigung nach einem der Ansprüche 1 bis 3,
**dadurch gekennzeichnet, dass**
die Torsionselemente (14) jeweils einen Querschnitt aufweisen, dessen durch die Gleitflächen (15) gebildete Gleitseiten gekrümmt sind.

7. Schaltbetätigung nach Anspruch 6,
**dadurch gekennzeichnet, dass**
bei zwei aneinander angrenzenden Gleitflächen (15) zweier benachbarter Torsionselemente die eine Gleitfläche (15) konkav und die andere Gleitfläche (15) konvex gekrümmt ist.

8. Schaltbetätigung nach Anspruch 6 oder 7,
**dadurch gekennzeichnet, dass**
bei zwei benachbarten Torsionselementen (14) das eine Torsionselement (14) bezüglich seiner Gleitflächen (15) bikonkav und das andere Torsionselement (14) bezüglich seiner Gleitflächen (15) bikonvex ausgebildet ist.

9. Schaltbetätigung nach einem der Ansprüche 2 bis 8,
**dadurch gekennzeichnet, dass**
die Torsionselemente (14) jeweils einen Querschnitt aufweisen, dessen durch die Gleitflächen (15) gebildete Höhe größer als dessen Breite ist.

10. Schaltbetätigung nach einem der Ansprüche 1 bis 9,
**dadurch gekennzeichnet, dass**
die Torsionselemente (14) jeweils einen eine Länge und eine Höhe aufweisenden Längsquerschnitt parallel zu den Gleitflächen (15) aufweisen, dessen Höhe zu den Enden der Torsionselemente (14) hin zunimmt.

11. Schaltbetätigung nach Anspruch 10,
**dadurch gekennzeichnet, dass**
der Längsquerschnitt einen X-förmigen Verlauf aufweist.

12. Schaltbetätigung nach einem der Ansprüche 1 bis 11,
**dadurch gekennzeichnet, dass**
die Torsionsfeder (5) aus einem Federstahl gefertigt ist.

## Claims

1. Shift actuation for an automated transmission, with a control device and with an actuator (1) which has a drive and elastic coupling device (2) to a transmission shaft of the transmission, the coupling device (2) being provided with an accumulator device (4) for accumulating the mechanical energy fed into the coupling device (2) by the drive, the accumulator device (4) having a torsion spring (5) for accumulating the fed-in mechanical energy, which torsion spring is connected fixedly in terms of rotation on its drive side to a drive element (6) of the actuator (1) and on its output side to an output element (7) of the actuator (1), **characterized in that** the torsion spring (5) is designed as a torsion bar (13), and the torsion bar (13) has along its longitudinal extent a number of torsion elements (14) which are arranged parallel to one another and displacably in relation to one another in the longitudinal direction and which are connected fixedly in terms of rotation to one another on the end faces.

2. Shift actuation according to Claim 1, **characterized in that** the torsion elements (14) are arranged in a row running transversely with respect to their longitudinal direction.

3. Shift actuation according to Claim 1 or 2, **characterized in that** the torsion elements (14) are arranged so as to bear against one another in each case with a side face as a sliding face (15) for relative displacement with respect to one another.

4. Shift actuation according to one of Claims 1 to 3, **characterized in that** the torsion elements (14) have in each case a polygonal cross section.

5. Shift actuation according to one of Claims 1 to 4, **characterized in that** the torsion elements (14) have a rectangular cross section.

6. Shift actuation according to one of Claims 1 to 3, **characterized in that** the torsion elements (14) have in each case a cross section of which the sliding sides formed by the sliding faces (15) are curved.

7. Shift actuation according to Claim 6, **characterized in that**, in the case of two mutually contiguous sliding faces (15) of two adjacent torsion elements, one sliding face (15) is curved concavely and the other sliding face (15) is curved convexly.

8. Shift actuation according to Claim 6 or 7, **characterized in that**, in the case of two adjacent torsion elements (14), one torsion element (14) is designed biconcavely with regard to its sliding faces (15) and the other torsion element (14) is designed biconvexly with regard to its sliding faces (15).

9. Shift actuation according to one of Claims 2 to 8, **characterized in that** the torsion elements (14) have in each case a cross section of which the height formed by the sliding faces (15) is greater than its width.

10. Shift actuation according to one of Claims 1 to 9, **characterized in that** the torsion elements (14) have in each case a longitudinal cross section parallel to the sliding faces (15) which has a length and a height and the height of which increases towards the ends of the torsion elements (14).

11. Shift actuation according to Claim 10, **characterized in that** the longitudinal cross section has an X-shaped profile.

12. Shift actuation according to one of Claims 1 to 11, **characterized in that** the torsion spring (5) is manufactured from a spring steel.

## Revendications

1. Commande de changement de vitesse pour une boîte de vitesses automatisée, comprenant un dispositif de commande et un actionneur (1), qui présente un entraînement et un dispositif d'accouplement élastique (2) avec un arbre de boîte de vitesses, le dispositif d'accouplement (2) étant pourvu d'un dispositif accumulateur (4) pour stocker l'énergie mécanique introduite par l'entraînement dans le dispositif d'accouplement (2),
le dispositif accumulateur (4) présentant un ressort de torsion (5) pour stocker l'énergie mécanique introduite, qui est en liaison solidaire en rotation de son côté d'entraînement avec un élément d'entraînement (6) de l'actionneur (1) et de son côté de sortie avec un élément de sortie (7) de l'actionneur (1),
**caractérisée en ce que**
le ressort de torsion (5) est réalisé sous forme de barre de torsion (13) et
la barre de torsion (13) présente, dans son étendue longitudinale, un certain nombre d'éléments de torsion (14), qui sont disposés parallèlement les uns aux autres dans la direction longitudinale et de manière déplaçable les uns par rapport aux autres, et qui sont connectés les uns aux autres de manière solidaire en rotation à leur extrémité.

2. Commande de changement de vitesse selon la revendication 1,
**caractérisée en ce que**
les éléments de torsion (14) sont disposés en rangée s'étendant transversalement à leur direction longitudinale.

3. Commande de changement de vitesse selon la revendication 1 ou 2,
**caractérisée en ce que**
les éléments de torsion (14) sont disposés en appui les uns contre les autres par une face latérale respective servant de surface de glissement (15) en vue de leur glissement les uns par rapport aux autres.

4. Commande de changement de vitesse selon l'une quelconque des revendications 1 à 3,
**caractérisée en ce que**
les éléments de torsion (14) présentent chacun une section transversale polygonale.

5. Commande de changement de vitesse selon l'une quelconque des revendications 1 à 4,
**caractérisée en ce que**
les éléments de torsion (14) présentent une section transversale rectangulaire.

6. Commande de changement de vitesse selon l'une quelconque des revendications 1 à 3,
**caractérisée en ce que**
les éléments de torsion (14) présentent chacun une section transversale dont les côtés de glissement formés par les surfaces de glissement (15) sont courbés.

7. Commande de changement de vitesse selon la revendication 6,
**caractérisée en ce que**
lorsque deux surfaces de glissement (15) de deux éléments de torsion adjacents sont mutuellement adjacentes, l'une des surfaces de glissement (15) est concave et l'autre (15) convexe.

8. Commande de changement de vitesse selon la revendication 6 ou 7,
**caractérisée en ce que**
lorsque deux éléments de torsion (14) sont adjacents l'un à l'autre, l'un des éléments de torsion (14) a des surfaces de glissement (15) biconcaves et l'autre (14) a des surfaces de glissement (15) biconvexes.

9. Commande de changement de vitesse selon l'une quelconque des revendications 2 à 8,
**caractérisée en ce que**
les éléments de torsion (14) présentent à chaque fois une section transversale dont la hauteur formée par les surfaces de glissement (15) est supérieure à la largeur.

10. Commande de changement de vitesse selon l'une quelconque des revendications 2 à 9,
**caractérisée en ce que**
les éléments de torsion (14) présentent chacun une section transversale longitudinale parallèlement aux surfaces de glissement (15) qui présente une longueur et une hauteur, et dont la hauteur augmente vers les extrémités des éléments de torsion (14) .

11. Commande de changement de vitesse selon la revendication 10,
**caractérisée en ce que**
la section transversale longitudinale présente une allure en forme de X.

12. Commande de changement de vitesse selon l'une quelconque des revendications 1 à 11,
**caractérisée en ce que**
le ressort de torsion (15) est fabriqué en acier à ressort.
